# EUROPÄISCHE PATENTSCHRIFT

(11) **EP 1 472 483 B1**
(45) Veröffentlichungstag und Bekanntmachung des Hinweises auf die Patenterteilung: **22.08.2007**
(21) Anmeldenummer: 03706282.5
(22) Anmeldetag: 06.02.2003
(51) Int. Cl.: F16L 21/02

(54) **VORTRIEBSROHR**
CONDUIT PIPE
TUBE D'AVANCEMENT

(30) Priorität: 06.02.2002 DE 10204974
(43) Veröffentlichungstag der Anmeldung: 03.11.2004
(73) Patentinhaber: Steinzeug Abwassersysteme GmbH, 50858 Köln (DE)
(72) Erfinder: Beyert, Joachim, 4728 Hergenrath (BE)
(74) Vertreter: Naeven, Ralf
(86) Internationale Anmeldenummer: PCT/DE2003/000328
(87) Internationale Veröffentlichungsnummer: WO 2003/067137

(56) Entgegenhaltungen:
- AT-B- 382 224
- DE-C- 19 901 497
- DE-U- 29 900 679

## Beschreibung

Die Erfindung betrifft ein Vortriebsrohr umfassend einzelne Rohrschüsse mit einem Grundkörper, wobei die Rohrschüsse an ihren Enden Kontaktstirnflächen aufweisen, mit denen sie bei zusammengesetztem Vortriebsrohr aneinander stoßen.

Derartige Vortriebsrohre, z.B. mit Steinzeug oder Beton als Material des Grundkörpers werden bei unterirdischen Rohrverlegungen in den Boden eingepresst, wobei die Rohrschüsse nacheinander eingeführt werden. Die axial gerichtete Druckübertragung von einem zum benachbarten Rohrschuss erfolgt über die Kontaktstirnflächen. Die hohe axiale Druckbelastung kann zu erheblichen Schäden an den Rohrschüssen führen.

Vortriebsrohre der eingangs genannten Art sind z. B. aus der DE 19817000 A1 bekannt. Dabei weist der hintere Abschnitt eines Rohrschusses ein Zapfenende auf, über das eine eine Muffe bildende Metallhülse geschoben wird, welche mit dem vorderen Ende des folgenden Rohrschusses verbunden ist. Mit der Metallhülse werden flexible Dichtungsmaterialien umschlossen. Die Metallhülse ist nicht geeignet, Schäden auf Grund von hohen axialen Druckbelastungen zu reduzieren.

Sowohl aus der DE 29813467 U1 als auch aus der DE 29 900 679 U1 ist ein Vortriebsrohr der eingangs genannten Art bekannt, bei dem ein Führungsring aus Stahl zur Herstellung einer Muffenverbindung von benachbarten Rohrschüssen eingesetzt wird. Zwischen dem Führungsrohr und dem Zapfenende des vorderen Rohrschusses sind ebenfalls flexible Dichtungsmaterialien vorgesehen. Das Führungsrohr kann Schäden aufgrund der hohen Druckbelastung beim Vortrieb nicht reduzieren.

Es ist nun Aufgabe der vorliegenden Erfindung, ein Vortriebsrohr der eingangs genannten Art zur Verfügung zu stellen, das gegenüber dem Stand der Technik eine verringerte Anfälligkeit für Schäden aufweist.

Diese Aufgabe wird bei einem Vortriebsrohr der eingangs genannten Art dadurch gelöst, dass die Rohrschüsse bei zusammengesetztem Vortriebsrohr an ihren beiden Enden jeweils unmittelbar oder mittelbar auf ihrer äußeren Mantelfläche einen eine radial nach innen gerichtete Druckvorspannung bewirkenden Spannring aufweisen.

Die Druckvorspannung wirkt beim Vorpressen der Rohre im Bereich der Stirnflächen erzeugten radialen Zugkräften entgegen, so dass Rissbildungen bzw. ein Abbrechen von Stücken erst bei sehr viel höheren Presskräften auftreten als beim Stand der Technik. Auf diese Weise können erhebliche Sanierungskosten eingespart werden. Die Druckspannung sollte bei Rohrschüssen aus Steinzeug zumindest 10 N/mm² betragen. Dies kann gegenüber dem Stand der Technik beim Einpressen des Vortriebsrohres an den Rohrschussenden etwa doppelt so hohe Zugspannungen erlauben, ohne dass Beschädigungen auftreten.

Das erfindungsgemäße Vortriebsrohr kann auch so ausgebildet sein, dass der Spannring aufgeschrumpft ist. Zur Herstellung des erfindungsgemäßen Vortriebsrohrs wird der Spannring zunächst erwärmt, bis sein Innendurchmesser geringfügig größer ist als der Außendurchmesser des entsprechenden Endes des Rohrschusses und wird darauf aufgeschoben. Durch die Abkühlung des Stahlrings wird dieser aufgeschrumpft. Hierdurch entsteht die nach innen gerichtete Druckvorspannung. Alternativ kann der Spannring auch mechanisch in axialer Richtung aufgepresst sein. Für ein derartiges Aufpressen kann auf dem Grundkörper des Rohrschusses ein Zwischenring, z.B. aus Gummi, vorgesehen sein, auf den der Spannring aufgeschoben wird. Dies ist ein Beispiel für einen mittelbar auf der Mantelfläche des Grundkörpers befindlichen Spannring. Das Aufpressen kann durch ein Gleitmittel erleichtert werden.

Das erfindungsgemäße Vortriebsrohr weist vorzugsweise einen Spannring aus nicht rostendem Stahl, z.B. V2A, auf.

Des Weiteren kann das erfindungsgemäße Vortriebsrohr so ausgebildet werden, dass mindestens zwei der Rohrschüsse bei zusammengesetztem Vortriebsrohr mit jeweils den Spannring aufweisenden Spitzenden aneinander stoßen und die Verbindungsstelle mit einem Verbindungsring umfasst ist.

Der Verbindungsring dient zur Sicherung der Stoßstelle und kann gleichzeitig eine Dichtfunktion haben. Hierfür kann es vorteilhaft sein, auf den Spitzenden Dichtringe vorzusehen.

Das erfindungsgemäße Vortriebsrohr kann aber auch so ausgebildet sein, dass an einem der Enden mindestens eines Rohrschusses der Spannring über den Grundkörper hinausragt und damit eine Aufnahme für das Spitzende eines benachbarten Rohrschusses bildet. Auf diese Weise kann der Spannring gleichzeitig die Funktion des Verbindungsringes übernehmen. Der Spannring des einen Rohrschusses kann über den Spannring des benachbarten Rohrschusses und gegebenenfalls über einen Dichtring geschoben werden.

Bei einem über den Grundkörper hinausragenden Spannring kann das erfindungsgemäße Vortriebsrohr auch so ausgebildet sein, dass der Spannring beim Zusammensetzen der beiden benachbarten Rohrschüsse unmittelbar oder mittelbar auf die äußere Mantelfläche des Spitzendes des Nachbarrohrschusses derart aufgepresst wird, dass der Spannring an diesem Spitzende ebenfalls eine radial nach innen wirkende Druckvorspannung erzeugt. Es ist denkbar, beim Zusammensetzen des Vortriebsrohres den Spannring zuerst auf das hintere Spitzende des bereits im Erdreich befindlichen Rohrschusses aufzupressen und anschließend den Nachbarrohrschuss in die durch den Spannring gebildete Aufnahme zu pressen. Alternativ könnte der Spannring bereits vor Einbringen des ersten Rohrschusses auf dessen Spitzende aufgebracht sein.

Schließlich kann das erfindungsgemäße Vortriebsrohr so ausgebildet sein, dass zwischen zwei Rohrschüssen eine Muffenverbindung gegeben ist, wobei sowohl auf der äußeren Mantelfläche der Muffe des einen Rohrschusses als auch auf der äußeren Mantelfläche des Spitzendes des benachbarten Rohrschusses der Spannring vorgesehen ist.

Im Folgenden werden vier bevorzugte Ausbildungsformen des erfindungsgemäßen Vortriebsrohres anhand von Figuren dargestellt.

Es zeigt schematisch
- Figur 1:: im Querschnitt teilweise zwei miteinander zu verbindende Rohrschüsse mit Verbindungsring,
- Figur 2:: im Querschnitt teilweise zwei miteinander zu verbindende Rohrschüsse mit überstehendem Spannring an einem der Rohrschüsse,
- Figur 3:: im Querschnitt zwei miteinander zu verbindende Rohrschüsse mit Muffenverbindung und
- Figur 4:: im Querschnitt zwei miteinander zu verbindende Rohrschüsse mit einem gemeinsamen Spannring.

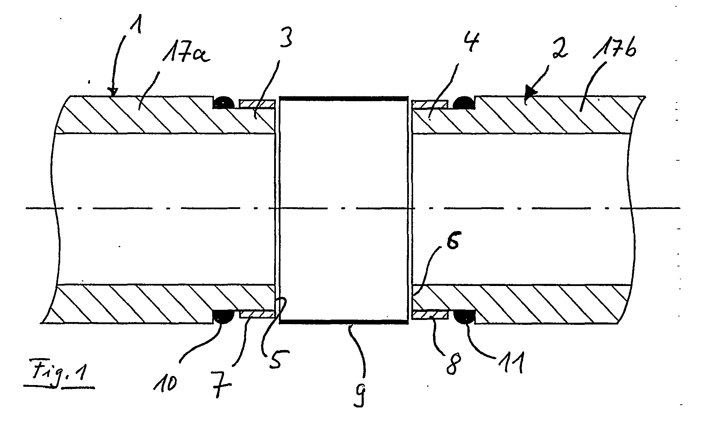

Figur 1 zeigt einen ersten Rohrschuss 1 und einen damit zu verbindenden zweiten Rohrschuss 2 eines Vortriebsrohres. Beide Rohrschüsse 1 und 2 weisen Spitzenden 3 und 4 auf, deren Stirnflächen 5 und 6 aneinander stoßen. An den Spitzenden 3 und 4 weisen beide Rohrschüsse 1 und 2 auf der äußeren Mantelfläche ihres Grundkörpers 17a bzw. 17b jeweils einen Spannring 7 bzw. 8 auf, der durch Aufschrumpfen aufgebracht wurde. Hierzu wurden die Spannringe 7, 8 zunächst auf ca. 300° C bis 600° C erwärmt, wobei in diesem erwärmten Zustand ihr Innendurchmesser geringfügig größer ist als der Außendurchmesser des jeweiligen Spitzendes 3 bzw. 4. Nach dem Aufschieben des Spannrings 7 bzw. 8 auf das Spitzende 3 bzw. 4 zieht sich der Spannring 7 bzw. 8 aufgrund der Abkühlung zusammen und baut eine nach radial innen gerichtete Druckvorspannung im Spitzende 3 bzw. 4 auf.

Die von den Spannringen 7 und 8 jeweils erzeugten Druckvorspannungen wirken direkt radialen Zugspannungen entgegen, die beim Vorpressen der miteinander verbundenen Rohrschüsse 1 und 2 aufgrund der auf die Stirnflächen 5 und 6 wirkenden axialen Presskräfte entstehen. Zum Verbinden der beiden Rohrschüsse 1 und 2 wird über das Spitzende 3 des vorderen Rohrschusses 1 ein Verbindungsring 9 geschoben und anschließend der zweite Rohrschuss 2 gegen den ersten Rohrschuss 1 gedrückt. Die Breite des Verbindungsrings 9 ist derart gewählt, dass bei zusammengefügten Rohrschüssen 1 und 2 die Spitzenden 3 und 4 hierdurch abgedeckt sind. Die Spitzenden 3 und 4 weisen jeweils noch einen Profilring 10 bzw. 11 zum Abdichten der Rohrschussverbindung auf.

Die Rohrschüsse 1 und 2 sind in der Regel symmetrisch ausgebildet, d.h. weisen an ihren beiden Enden Spitzenden 3 bzw. 4 auf.

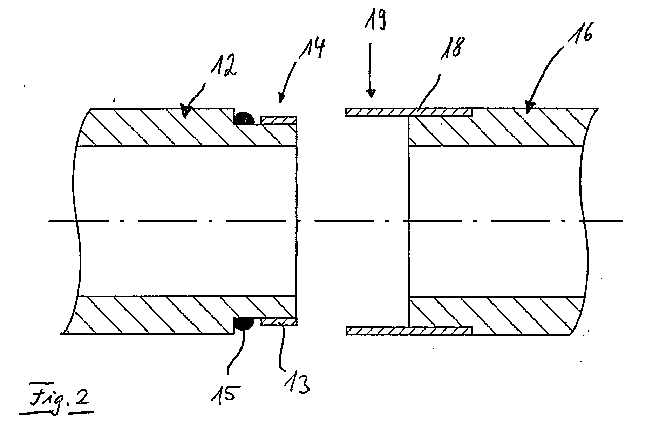

Figur 2 zeigt wiederum einen Rohrschuss 12 mit einem einen Spannring 13 aufweisenden Spitzende 14 und einem Profilring 15 für die Dichtung. An diesem Ende ist der Rohrschuss 12 somit genau so ausgebildet wie der Rohrschuss 1 aus Figur 1. Der damit zusammenwirkende Rohrschuss 16 weist eine Muffe 19 auf, die durch einen überstehenden Spannring 18 gebildet ist. Beim Zusammenfügen der beiden Rohrschüsse 12 und 16 schiebt sich der Spannring 18 über den Spannring 13 des anderen Rohrschusses 12 sowie über dessen Profilring 15. Der Spannring 18 des Rohrschusses 16 übernimmt somit die Funktion des Verbindungsringes 9 gemäß Figur 1.

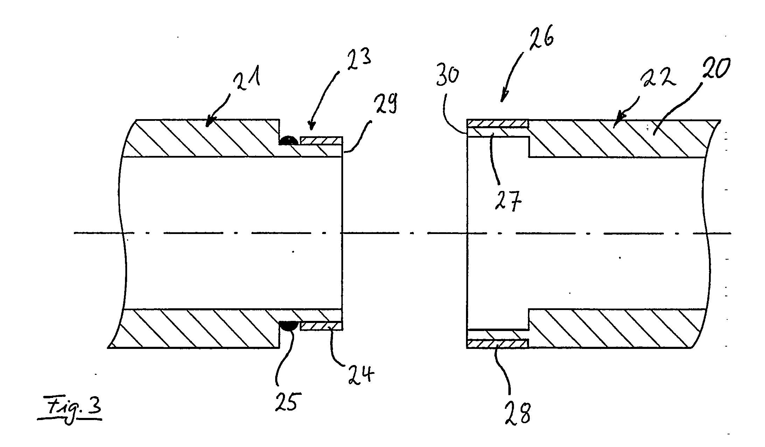

Figur 3 zeigt eine mögliche Verbindung zweier Rohrschüsse 21 und 22, bei dem der Rohrschuss 21 an seinem einen Ende ein Spitzende 23 mit Spannring 24 und Profilring 25 aufweist und das damit zusammenwirkende Ende des anderen Rohrschusses 22 ein Muffenende 26, wobei auf der äußeren Mantelfläche der durch den Grundkörper 20 gebildeten Muffe 27 ebenfalls ein Spannring 28 vorgesehen ist. Der Profilring 25 wirkt dabei mit der inneren Mantelfläche der Muffe 27 zusammen. Die Tiefe der Muffe 27 entspricht der Länge des Spitzendes 23, so dass beim Vorpressen des Vortriebsrohres die Kräfte sowohl über die Stirnfläche 29 des Spitzendes 23 als auch über die Stirnfläche 30 der Muffe 27 übertragen werden.

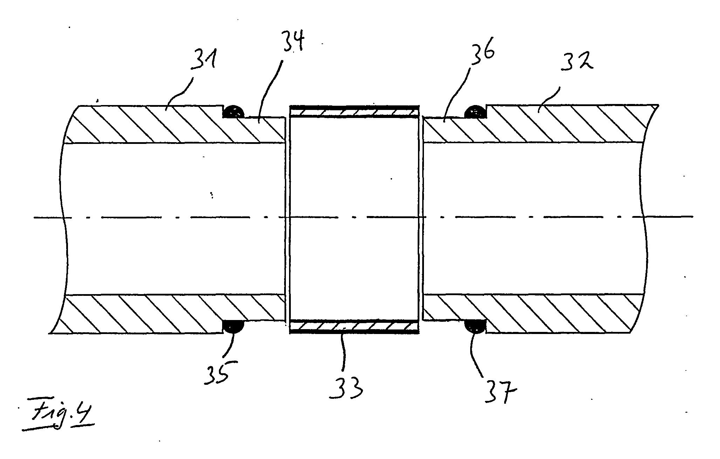

Schließlich zeigt Figur 4 eine Verbindung zweier Rohrschüsse 31 und 32, bei der ein Spannring 33 zunächst in axialer Richtung auf das Spitzende 34 des Rohrschusses 31 aufgepresst wird. Dies kann z. B. erfolgen, wenn sich der Rohrschuss 31 bereits im Erdreich befindet. Der Spannring 33 wird dabei gegen einen Dichtring 35 gepresst, der das Vortriebsrohr gegen Eindringen von z.B. Wasser abdichtet. Der Spannring 33 steht nach dem Aufpressen auf Rohrschuss 31 über und bildet somit eine Muffe für den Nachbarrohrschuss 32, der nun seinerseits mit seinem Spitzende 36 in den Spannring 33 eingepresst wird. Auch am Rohrschuss 32 kann ein Dichtring 37 vorgesehen sein. Der Spannring 33 wirkt somit auf die Spitzenden 34 und 36 beider Rohrschüsse 31 und 32 gleichermaßen und baut dort die gewünschte radial nach innen gerichtete Druckvorspannung auf.

### Bezugszeichenliste

- 1: Rohrschuss
- 2: Rohrschuss
- 3: Spitzende
- 4: Spitzende
- 5: Stirnfläche
- 6: Stirnfläche
- 7: Spannring
- 8: Spannring
- 9: Verbindungsring
- 10: Profilring
- 11: Profilring
- 12: Rohrschuss
- 13: Spannring
- 14: Spitzende
- 15: Profilring
- 16: Rohrschuss
- 17a,b: Grundkörper
- 18: Spannring
- 19: Muffe
- 20: Grundkörper
- 21: Rohrschuss
- 22: Rohrschuss
- 23: Spitzende
- 24: Spannring
- 25: Profilring
- 26: Muffenende
- 27: Muffe
- 28: Spannring
- 29: Stirnfläche
- 30: Stirnfläche
- 31: Rohrschuss
- 32: Rohrschuss
- 33: Spannring
- 34: Spitzende
- 35: Dichtring
- 36: Spitzende
- 37: Dichtring

## Patentansprüche

1. Vortriebsrohr, umfassend einzelne Rohrschüsse (1, 2, 12, 16, 21, 22, 31, 32) mit einem Grundkörper (17,20), wobei die Rohrschüsse (1, 2, 12, 16, 21, 22, 31, 32) an ihren Enden Kontaktstirnflächen (5, 6, 29, 30) aufweisen, mit denen sie bei zusammengesetztem Vortriebsrohr aneinander stoßen, **dadurch gekennzeichnet, dass** die Rohrschüsse (1, 2, 12, 16, 21, 22, 31, 32) bei zusammengesetztem Vortriebsrohr an ihren beiden Enden jeweils unmittelbar oder mittelbar auf der äußeren Mantelfläche des Grundkörpers (17,20) einen eine radial nach innen gerichtete Druckvorspannung bewirkenden Spannring (7, 8, 13, 18, 24, 28, 33) aufweisen.

2. Vortriebsrohr nach Anspruch 1, **dadurch gekennzeichnet, dass** der Spannring (7, 8, 13, 18, 24, 28, 33) aufgeschrumpft ist.

3. Vortriebsrohr nach Anspruch 1, **dadurch gekennzeichnet, dass** der Spannring (7, 8, 13, 18, 24, 28, 33) mechanisch aufgepresst ist.

4. Vortriebsrohr nach einem der Ansprüche 1 bis 3, **dadurch gekennzeichnet, dass** der Spannring (7, 8, 13, 18, 24, 28, 33) aus Stahl ist.

5. Vortriebsrohr nach einem der Ansprüche 1 bis 4, **dadurch gekennzeichnet, dass** mindestens zwei der Rohrschüsse (1, 2, 12, 16, 21, 22, 31, 32) bei zusammengesetztem Vortriebsrohr mit jeweils den Spannring (7, 8, 13, 18, 24, 28, 33) aufweisenden Spitzenden (3, 4, 14, 17, 23, 34, 36) aneinander stoßen und die Verbindungsstelle mit einem Verbindungsring (9) umfasst ist.

6. Vortriebsrohr nach einem der Ansprüche 1 bis 4, **dadurch gekennzeichnet, dass** an einem der Enden mindestens eines Rohrschusses (1, 2, 12, 16, 21, 22, 31, 32) der Spannring (7, 8, 13, 18, 24, 28, 33) über den Grundkörper (17,20) hinausragt und damit eine Aufnahme für das Spitzende (3, 4, 14, 17, 23, 34, 36) eines benachbarten Rohrschusses (1, 2, 12, 16, 21, 22, 31, 32) bildet.

7. Vortriebsrohr nach Anspruch 6, **dadurch gekennzeichnet, dass** der Spannring (7, 8, 13, 18, 24, 28, 33) beim Zusammensetzen der beiden benachbarten Rohrschüsse (1, 2, 12, 16, 21, 22, 31, 32) unmittelbar oder mittelbar auf die äußere Mantelfläche des Spitzendes (3, 4, 14, 17, 23, 34, 36) des Nachbarrohrschusses derart aufgepresst wird, dass der Spannring (7, 8, 13, 18, 24, 28, 33) an diesem Spitzende (3, 4, 14, 17, 23, 34, 36) eine radial nach innen wirkende Druckvorspannung erzeugt.

8. Vortriebsrohr nach einem der Ansprüche 1 bis 4, **dadurch gekennzeichnet, dass** zwischen zwei Rohrschüssen (1, 2, 12, 16, 21, 22, 31, 32) eine Muffenverbindung gegeben ist, wobei sowohl auf der äußeren Mantelfläche der Muffe (27) des einen Rohrschusses (1, 2, 12, 16, 21, 22, 31, 32) als auch auf der äußeren Mantelfläche des Spitzendes (3, 4, 14, 17, 23, 34, 36) des benachbarten Rohrschusses (1, 2, 12, 16, 21, 22, 31, 32) der Spannring (7, 8, 13, 18, 24, 28, 33) vorgesehen ist.

## Claims

1. A driving pipe comprising individual pipe sections (1, 2, 12, 16, 21, 22, 31, 32) with a basic body (17, 20), whereby the pipe sections (1, 2, 12, 16, 21, 22, 31, 32) have at their ends contact end faces (5, 6, 29, 30), with which they abut against one another in the assembled driving pipe, **characterised in that** the pipe sections (1, 2, 12, 16, 21, 22, 31, 32) in the assembled driving pipe have respectively at their two ends, directly or indirectly on the outer lateral surface of the basic body (17, 20), a clamping ring (7, 8, 13, 18, 24, 28, 33) creating a compressive prestress directed radially inwards.

2. The driving pipe according to claim 1, **characterised in that** the clamping ring (7, 8, 13, 18, 24, 28, 33) is shrunk on.

3. The driving pipe according to claim 1, **characterised in that** the clamping ring (7, 8, 13, 18, 24, 28, 33) is pressed on mechanically.

4. The driving pipe according to any one of claims 1 to 3, **characterised in that** the clamping ring (7, 8, 13, 18, 24, 28, 33) is made of steel.

5. The driving pipe according to any one of claims 1 to 4, **characterised in that** at least two of the pipe sections (1, 2, 12, 16, 21, 22, 31, 32) in the assembled driving pipe abut against one another with spigot ends (3, 4, 14, 17, 23, 34, 36) each having the clamping ring (7, 8, 13, 18, 24, 28, 33) and the junction point is surrounded by a connection ring (9).

6. The driving pipe according to any one of claims 1 to 4, **characterised in that** the clamping ring (7, 8, 13, 18, 24, 28, 33) projects beyond the basic body (17, 20) at one of the ends of at least one pipe section (1, 2, 12, 16, 21, 22, 31, 32) and thus forms an accommodation for the spigot end (3, 4, 14, 17, 23, 34, 36) of a neighbouring pipe section (1, 2, 12, 16, 21, 22, 31, 32).

7. The driving pipe according to claim 6, **characterised in that** the clamping ring (7, 8, 13, 18, 24, 28, 33), during the assembly of the two neighbouring pipe sections (1, 2, 12, 16, 21, 22, 31, 32), is pressed directly or indirectly onto the outer lateral surface of the spigot end (3, 4, 14, 17, 23, 34, 36) of the neighbouring pipe section in such a way that the clamping ring (7, 8, 13, 18, 24, 28, 33) produces at this spigot end (3, 4, 14, 17, 23, 34, 36) a compressive prestress acting radially inwards.

8. The driving pipe according to any one of claims 1 to 4, **characterised in that** a sleeve connection is provided between two pipe sections (1, 2, 12, 16, 21, 22, 31, 32), whereby the clamping ring (7, 8, 13, 18, 24, 28, 33) is provided both on the outer lateral surface of the sleeve (27) of the one pipe section (1, 2, 12, 16, 21, 22, 31, 32) as well as on the outer lateral surface of the spigot end (3, 4, 14, 17, 23, 34, 36) of the neighbouring pipe section (1, 2, 12, 16, 21, 22, 31, 32).

## Revendications

1. Tube de creusement, qui comprend des éléments tubulaires individuels (1, 2, 12, 16, 21, 22, 31, 32) dotés d'un corps de base (17, 20), les éléments tubulaires (1, 2, 12, 16, 21, 22, 31, 32) présentant à leurs extrémités des surfaces frontales de contact (5, 6, 29, 30) par lesquelles ils viennent buter l'un contre l'autre lorsque le tube de creusement est assemblé, **caractérisé en ce que** lorsque le tube de creusement est assemblé, les éléments tubulaires (1, 2, 12, 16, 21, 22, 31, 32) présentent sur leurs deux extrémités une bague de serrage (7, 8, 13, 18, 24, 28, 33) qui exerce directement ou indirectement une précontrainte de pression orientée radialement vers l'intérieur sur la surface d'enveloppe extérieure du corps de base (17, 20).

2. Tube de creusement selon la revendication 1, **caractérisé en ce que** la bague de serrage (7, 8, 13, 18, 24, 28, 33) est sertie.

3. Tube de creusement selon la revendication 1, **caractérisé en ce que** la bague de serrage (7, 8, 13, 18, 24, 28, 33) est serrée mécaniquement.

4. Tube de creusement selon l'une des revendications 1 à 3, **caractérisé en ce que** la bague de serrage (7, 8, 13, 18, 24, 28, 33) est en acier.

5. Tube de creusement selon l'une des revendications 1 à 4, **caractérisé en ce que** lorsque le tube de creusement est assemblé, au moins deux des éléments tubulaires (1, 2, 12, 16, 21, 22, 31, 32) viennent buter l'un contre l'autre chaque fois par leurs extrémités rétrécies (3, 4, 14, 17, 23, 34, 36) qui présente la bague de serrage (7, 8, 13, 18, 24, 28, 33) et **en ce que** l'emplacement de la liaison est entouré par une bague de liaison (9).

6. Tube de creusement selon l'une des revendications 1 à 4, **caractérisé en ce que** à une des extrémités d'au moins un élément tubulaire (1, 2, 12, 16, 21, 22, 31, 32), la bague de serrage (7, 8, 13, 18, 24, 28, 33) déborde au-delà du corps de base (17, 20) et forme ainsi un logement pour l'extrémité rétrécie (3, 4, 14, 17, 23, 34, 36) de l'élément tubulaire (1, 2, 12, 16, 21, 22, 31, 32) voisin.

7. Tube de creusement selon la revendication 6, **caractérisé en ce que** lorsque les deux éléments tubulaires (1, 2, 12, 16, 21, 22, 31, 32) voisins sont assemblés, la bague de serrage (7, 8, 13, 18, 24, 28, 33) est comprimée directement ou indirectement sur la surface d'enveloppe extérieure de l'extrémité rétrécie (3, 4, 14, 17, 23, 34, 36) de l'élément tubulaire suivant et **en ce que** la bague de serrage (7, 8, 13, 18, 24, 28, 33) exerce sur cette extrémité rétrécie (3, 4, 14, 17, 23, 34, 36) une précontrainte de compression qui agit radialement vers l'intérieur.

8. Tube de creusement selon l'une des revendications 1 à 4, **caractérisé en ce qu'**une liaison par manchon est prévue entre deux éléments tubulaires (1, 2, 12, 16, 21, 22, 31, 32), et **en ce que** la bague de serrage (7, 8, 13, 18, 24, 28, 33) est prévue à la fois sur la surface d'enveloppe extérieure du manchon (27) d'un des éléments tubulaires (1, 2, 12, 16, 21, 22, 31, 32) que sur la surface d'enveloppe extérieure de l'extrémité rétrécie (3, 4, 14, 17, 23, 34, 36) de l'élément tubulaire (1, 2, 12, 16, 21, 22, 31, 32) voisin.
